Europäisches Patentamt

European Patent Office

Office européen des brevets

(19)

(11) Veröffentlichungsnummer: **0 050 729**

**A1**

(12) # EUROPÄISCHE PATENTANMELDUNG

(21) Anmeldenummer: 81107069.7

(22) Anmeldetag: 09.09.81

(51) Int. Cl.³: **F 16 B 13/00**

(30) Priorität: 05.11.80 DE 3041697

(43) Veröffentlichungstag der Anmeldung:
05.05.82 Patentblatt 82/18

(84) Benannte Vertragsstaaten:
AT BE CH FR GB IT LI NL

(71) Anmelder: **artur fischer forschung**
**Weinhalde 14 - 18**
**D-7244 Waldachtal 3 (Tumlingen)(DE)**

(72) Erfinder: **Fischer, Artur, Dr.h.c.**
**Weinhalde 34**
**D-7244 Waldachtal 3/Tumlingen(DE)**

(54) **Befestigungselement für die Abstandsbefestigung eines als Putzträger dienenden Drahtgitters.**

(57) Die Erfindung betrifft ein Befestigungselement bestehend aus einem in einem Mauerwerk mittels Schraube (10), Nagel oder dgl. verankerbaren Dübel (1), der einen die Mauerwerksoberfläche überragenden verlängerten Hals aufweist, an dessen Ende eine Halterung für die Befestigung eines als Putzträger dienenden Drahtgitters (8) in einem Abstand zum Mauerwerk angeordnet ist. Um eine Montage von der Frontseite her durchführen zu können, die hohe Druck- bzw. Sogkräfte aufnehmen kann, ist die Halterung als radial abstehender, quer zur Längsachse des Dübels (1) eine der Drahtdicke entsprechende Einschlitzung (9) aufweisender Nocken (5) ausgebildet.

Fig.1

0050729

EP 1430

## Befestigungselement für die Abstands-<br>befestigung eines als Putzträger die-<br>nenden Drahtgitters

Die Erfindung betrifft ein Befestigungselement bestehend
aus einem in einem Mauerwerk mittels Schraube, Nagel oder
dgl. verankerbaren Dübel, der einen die Mauerwerksoberfläche überragenden verlängerten Hals aufweist, an dessen Ende eine Halterung für die Befestigung eines als Putzträger
dienenden Drahtgitters in einem Abstand zum Mauerwerk angeordnet ist.

Wird ein mit Wärmedämmplatten versehenes Mauerwerk verputzt,
werden als Putzträger Drahtgitter-Matten verwendet, die in
einem Abstand zu der Außenfläche des Mauerwerks bzw. der
Wärmedämmplatten zu befestigen sind. Das Drahtgitter muß
so befestigt werden, daß es in der Lage ist, das Gewicht
des Putzes einerseits und die auf die Putzschicht wirkenden Winddruck- und Sogkräfte andererseits aufzunehmen.

Es sind Spreizdübel zur Abstandsbefestigung bekannt, bei
denen die Abstandshalterung des zu befestigenden Bauteiles
durch am Dübelumfang angeordnete, elastisch zurückweichende
Vorsprünge erfolgt. Diese Art der Abstandshalterung hat
zwar den Vorteil, daß der Dübel in Durchsteckmontage in das
Mauerwerk einführbar ist, allerdings sind die elastischen
Vorsprünge nicht in der Lage, höhere Druckkräfte aufzunehmen, da die Gefahr des Um- bzw. Abknickens besteht. Neben
dieser Art von Abstandselementen sind auch solche mit starren Anschlagmitteln bekannt. Diese sind jedoch nicht in
Durchsteckmontage montierbar.

Der Erfindung liegt die Aufgabe zugrunde, ein Befestigungselement zur Abstandsbefestigung von Drahtgittern zu schaf-

EP 1430

fen, das von der Frontseite her montierbar ist und eine mit dem Drahtgitter in Eingriff zu bringende Halterung aufweist, die hohe Druck- bzw. Sogkräfte aufnehmen kann.

Erfindungsgemäß wird dies dadurch erreicht, daß die Halterung als radial abstehender, quer zur Längsachse des Dübels eine der Drahtdicke entsprechende Einschlitzung aufweisender Nocken ausgebildet ist.

Zur Abstandsbefestigung des Drahtgitters wird zunächst die oberste Reihe der Befestigungselemente in der Weise gesetzt, daß die radial abstehende Halterung nach oben gerichtet ist. In die quer zur Längsachse des Dübels verlaufende Einschlitzungen der Befestigungselemente wird dann das Drahtgitter eingehängt. Danach werden entsprechend der erforderlichen Verteilung der Befestigungselemente die Bohrungen hergestellt, wobei jeweils in der Mitte zwischen zwei vertikal verlaufenden Drähten und unterhalb des einzuhängenden horizontalen Drahtes gebohrt wird. Der Dübel wird dann mit horizontal gerichtetem Nocken in das Bohrloch soweit eingeschoben, bis die Einschlitzung unterhalb des horizontal verlaufenden Drahtes liegt. Durch Drehen des Dübels im Bohrloch um 90 Grad schwenkt der am Dübelhals angeordnete Nocken in den horizontal liegenden Draht ein. Damit ist der Draht in Axialrichtung des Dübels fest arretiert. Durch Eintreiben einer Schraube, Nagel oder dgl. in den Dübel wird dieser im Mauerwerk fest verankert und gleichzeitig die Stellung des Nockens arretiert. Eine Änderung des Abstandes zwischen Drahtgitter und Wand ist während der Montage in einfacher Weise dadurch möglich, daß vor Aufspreizen des Dübels dieser im Bohrloch entsprechend verschoben wird.

EP 1430

In einer weiteren Ausgestaltung der Erfindung kann der Einschlitzgrund quer zur Längsachse des Dübels eine mit der Mantelfläche des Dübels fluchtende Wölbung aufweisen. Durch diese Gestaltung wird das Einschwenken des Nockens in den Draht erleichtert. Ferner kann die Höhenlage des Bohrloches, dessen Durchmesser dem Dübeldurchmesser entspricht dadurch bestimmt werden, daß der Bohrer an der Unterkante des einzuhängenden Drahtes geführt wird. Durch die Flucht des Einschlitzgrundes mit der Mantelfläche des Dübels kommt damit nach dem Einschwenken des Nockens der Draht auf dem Einschlitzgrund zur Auflage.

In einer weiteren Ausgestaltung der Erfindung kann die Breite des zum Mauerwerk näherliegenden Nockenteiles höchstens gleich und die Breite des anderen Nockenteiles größer als der Durchmesser des Dübels sein. Durch diese Gestaltung ergibt sich ein Anschlag, der dafür sorgt, daß der Draht in die Schwenkebene der Einschlitzung geschoben wird.

In einer weiteren Ergänzung der Erfindung können die beiden Begrenzungsflächen der Einschlitzung quer zur Längsachse des Dübels konvex gewölbt sein. Durch diese Gestaltung wird das Einschwenken insbesondere dann erleichtert, wenn die Dübelachse nicht genau rechtwinklig zur Drahtgitterebene steht.

Schließlich kann die Stirnseite des Dübels mit einem Schlitz, Innensechskant oder dgl. zum Ansetzen eines Drehwerkzeuges versehen sein. Diese Maßnahme erleichtert das Verdrehen des Dübels im Bohrloch.

EP 1430

In einer weiteren Ergänzung der Erfindung kann an dem Dübelhals ein von dem Nocken ausgehender und in Längsrichtung des
Dübels verlaufender Steg angeordnet sein, dessen Stirnseite
als Anschlag dient. Der Abstand der Stirnseite des Steges
von der Einschlitzung im Nocken entspricht dem einzustellenden Abstand des Drahtgitters von der Außenfläche der auf dem
Mauerwerk aufgebrachten Wärmedämmplatten. Mit diesem Steg
ist somit eine einfache Einstellung des Abstandes möglich.
Im Bedarfsfalle ist auch eine Nachjustierung des Abstandes
möglich, da der Steg bei entsprechendem Druck in die Wärmedämmplatten eingedrückt werden kann.

In der Zeichnung ist ein Ausführungsbeispiel der Erfindung
dargestellt. Es zeigen:

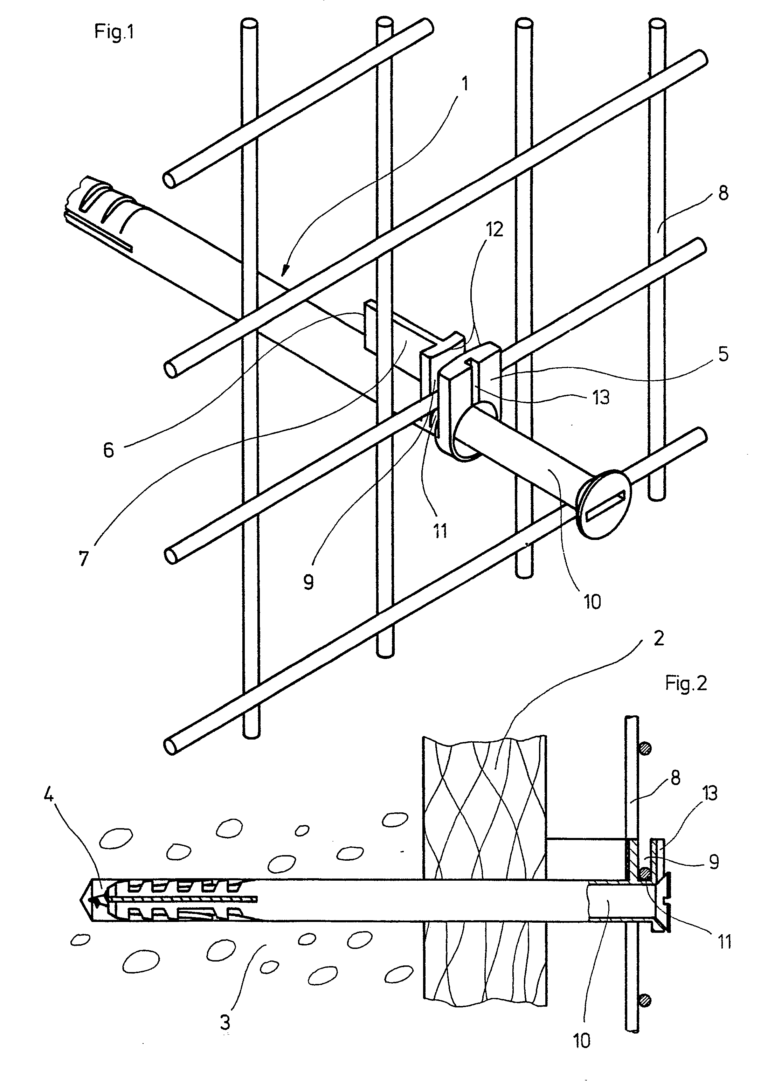

Figur 1    das Befestigungselement mit Drahtgitter

Figur 2    die Aufhängung des Drahtgitters an einem mit Wärmedämmplatten versehenen Mauerwerk.

Zur Verankerung des Dübels 1 wird durch die Wärmedämmplatten 2 hindurch in das Mauerwerk 3 ein Bohrloch 4 hergestellt,
dessen Lage so gewählt ist, daß die Oberkante des Bohrloches
4 mit der Unterkante des horizontal verlaufenden Drahtes
fluchtet und etwa in der Mitte zweier vertikal verlaufender
Drähte angeordnet ist. Danach wird der Dübel 1 bei horizontaler Stellung des Nockens 5 soweit eingeschoben, bis die
Stirnseite 6 des vom Nocken 5 ausgehenden und in Längsrichtung des Dübels 1 verlaufenden Steges 7 an der Außenfläche
der Wärmedämmplatte 2 anstößt. Durch Drehen des Dübels 1 im
Bohrloch 4 um 90 Grad kommt der horizontal verlaufende Draht
des Drahtgitters 8 in der Einschlitzung 9 zum Eingriff. Durch

- ~ -

EP 1430

die der Drahtdicke angepaßte Weite der Einschlitzung 9 ergibt sich eine feste Arretierung des Drahtgitters 8 in Achsrichtung des Dübels 1. Nach Einstellung des Abstandes des Drahtgitters 8 vom Mauerwerk 3 wird der Dübel 1 durch Eintreiben einer Schraube 10 fest im Mauerwerk verankert.

Das Einschwenken der Einschlitzung 9 in den Draht wird dadurch erleichtert, daß der Einschlitzgrund 11 eine Wölbung aufweist. Durch die Flucht dieser Wölbung mit der Mantelfläche des Dübels wird erreicht, daß der Draht nach dem Einschwenken auf dem Einschlitzgrund 11 aufliegt. Voraussetzung hierfür ist allerdings, daß die Oberkante der Bohrung 4 im Mauerwerk 3 mit der Unterkante des zu befestigenden Drahtes fluchtet. Diese Flucht ist dadurch erzielbar, daß bei der Herstellung des Bohrloches der Bohrer an der Unterkante des Drahtes zur Orientierung angelegt wird. Das Einschwenken wird ferner durch die konvex gewölbten Begrenzungsflächen 12 der Einschlitzung 9 begünstigt. Dieser Vorteil kommt vorallem dann zum Tragen, wenn die Dübelachse nicht genau rechtwinklig zur Drahtgitterebene verläuft.

Die auf den Außenputz und damit auf das Drahtgitter 8 wirkenden Druck- und Sogkräfte werden über den Nocken 5 von dem Dübel 1 aufgenommen. Die Breite des vom Mauerwerk 3 entfernt liegenderen Nockenteiles 5 a ist größer als der Dübeldurchmesser. Damit ergibt sich beim Einschieben des Dübels 1 in das Bohrloch 4 ein Anschlag, der den horizontal verlaufenden Draht in die Schwenkebene der Einschlitzung schiebt. Zum leichteren Verdrehen des Dübels 1 ist an dessen Stirnseite ein Schlitz 13 vorgesehen, an dem ein Drehwerkzeug, bspw. ein Schraubendreher, ansetzbar ist.

artur fischer forschung
7244 Waldachtal 3/Tumlingen

den 30. Oktober 1980
Ju/Woe

- 1 -

EP 1430

Patentansprüche

1. Befestigungselement bestehend aus einem in einem Mauerwerk mittels Schraube, Nagel oder dgl. verankerbaren Dübel, der einen die Mauerwerksoberfläche überragenden verlängerten Hals aufweist, an dessen Ende eine Halterung für die Befestigung eines als Putzträger dienenden Drahtgitters in einem Abstand zum Mauerwerk angeordnet ist, dadurch gekennzeichnet, daß die Halterung als radial abstehender, quer zur Längsachse des Dübels eine der Drahtdicke entsprechende Einschlitzung aufweisender Nocken ausgebildet ist.

2. Befestigungselement nach Anspruch 1, dadurch gekennzeichnet, daß der Einschlitzgrund quer zur Längsachse des Dübels eine mit der Mantelfläche des Dübels fluchtende Wölbung aufweist.

EP 1430

3. Befestigungselement nach Anspruch 1, dadurch gekennzeichnet, daß die Breite des zum Mauerwerk näherliegenden Nockenteiles höchstens gleich und die Breite des anderen Nockenteiles größer als der Durchmesser des Dübels ist.

4. Befestigungselement nach Anspruch 1, dadurch gekennzeichnet, daß die beiden Begrenzungsflächen der Einschlitzung quer zur Längsachse des Dübels konvex gewölbt sind.

5. Befestigungselement nach Anspruch 1, dadurch gekennzeichnet, daß die Stirnseite des Dübels mit einem Schlitz, Innensechskant oder dgl. zum Ansetzen eines Drehwerkzeuges versehen ist.

6. Befestigungselement nach Anspruch 1, dadurch gekennzeichnet, daß an dem Dübelhals ein von dem Nocken ausgehender und in Längsrichtung des Dübels verlaufender Steg angeordnet ist, dessen Stirnseite als Anschlag dient.

1/1

0050729

Fig.1

Fig.2

**Europäisches Patentamt**

# EUROPÄISCHER RECHERCHENBERICHT

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - U - 1 950 898 (FISCHER) <br> * Fig. 1 * <br><br> -- <br><br> DE - U - 7 319 249 (KUCH) <br> * Fig. 2 * <br><br> -- <br><br> GB - A - 1 489 855 (IMPEX-ESSEN VERTRIEB VON WERKZEUGEN) <br> * Fig. 3 * <br><br> -- <br><br> BE - A - 664 439 (FISCHER) <br> * Fig. 1 * <br><br> -- <br><br> US - A - 3 094 892 (TOPF) <br> * Fig. 1 * <br><br> ---- | 1 <br><br><br><br> 1,2 <br><br><br><br> 1 <br><br><br><br><br> 1,5 <br><br><br><br> 1,6 | F 16 B 13/00 <br><br><br><br><br><br><br><br><br><br> **RECHERCHIERTE SACHGEBIETE (Int. Cl.³)** <br><br><br><br> F 16 B 13/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 05-01-1982 | ZAPP |

EPA form 1503.1 06.78